# FASCICULE DE BREVET EUROPEEN

(11) **EP 1 842 974 B1**
(45) Date de publication et mention de la délivrance du brevet: **21.12.2011**
(21) Numéro de dépôt: 07290340.4
(22) Date de dépôt: 20.03.2007
(51) Int. Cl.: E03F 11/00, G01F 23/292

(54) **Fosse septique pourvue d'un dispositif de repérage de la séparation entre deux milieux fluides**
Biologische Klärgrube ausgestattet mit einer Vorrichtung zur Ortung der Separation zwischen zwei flüssigen Medien
Septic tank equipped with a device for marking the separation between two fluid environments

(30) Priorité: 05.04.2006 FR 0651221
(43) Date de publication de la demande: 10.10.2007
(73) Titulaire: EPARCO, 89710 Senan (FR)
(72) Inventeur: Maunoir, Siegfried, 34560 Montbazin (FR); Philip, Hervé, 34660 Cournonsec (FR)
(74) Mandataire: Derambure, Christian

(56) Documents cités:
- FR-A1- 2 731 272
- FR-A1- 2 797 650
- US-A- 3 551 670

## Description

L'invention concerne une fosse septique toutes eaux comprenant une enceinte, un conduit d'amenée des eaux usées et un conduit d'évacuation des eaux claires vers un système d'épandage.

Une telle fosse septique est par exemple décrite dans le document EP-0 240 412 permettant la protection du système d'épandage, un fonctionnement optimal de la fosse septique en ce qui concerne ses fonctions collecte, de liquéfaction et de rétention et une capacité de stockage accrue.

Dans une telle fosse septique se pose le problème de la mesure de la hauteur des boues. En effet, il est important de connaître le niveau auquel on passe d'un milieu liquide débarrassé des matières lourdes au milieu dans lequel ces matières lourdes sont déposées. Cette détermination a pour but de savoir si ces matières lourdes ont atteint un niveau trop haut et sont susceptibles de passer par le conduit d'évacuation des eaux claires afin de protéger le système d'épandage.

Le document FR-2 731 272 décrit un dispositif de repérage de la position de séparation entre deux milieux, notamment pour la mesure de la hauteur des boues dans une fosse septique. Ce dispositif comprend des moyens d'émission et de réception d'ondes dont les caractéristiques physiques sont spécifiques au milieu fluide qu'elles traversent. Lorsque ces caractéristiques sont modifiées, on sait que l'on est passé d'un milieu fluide à un autre.

Toutefois, un tel dispositif est destiné à être plongé à différentes hauteurs des liquides afin de chercher à quel niveaux se trouvent la séparation entre les différents milieux. Il est peu adapté à une fixation à demeure sur une fosse septique. Notamment, il ne permet pas de lier le résultat du repérage à un niveau d'alerte au-dessus duquel les boues risquent de passer par le conduit d'évacuation.

L'invention vise à pallier ces inconvénients en proposant une fosse septique comprenant un dispositif de repérage de la position de séparation entre deux milieux fixé à demeure au conduit d'évacuation des eaux claires et permettant de déterminer si un niveau d'alerte est dépassé ou non afin de prévenir le risque de pénétration des boues dans le conduit d'évacuation.

A cet effet, l'invention concerne une fosse septique toutes eaux comprenant les caractéristiques de la revendication 1.

Ainsi, dès que le milieu fluide de fond dépasse un certain niveau entraînant un risque de pénétration de ce milieu dans le conduit d'évacuation, le dispositif de repérage le détecte et l'utilisateur de la fosse peut en être averti afin de prendre les mesures nécessaires, notamment pour la protection du système d'épandage.

A cet effet, le dispositif de repérage peut en outre comprendre des moyens d'information visuels ou sonores couplés aux moyens de transmission, lesdits moyens d'information étant rendus actifs le milieu fluide change entre les moyens d'émission et les moyens de réception.

Selon une réalisation, le niveau d'alerte est situé à environ 1/3 de la hauteur totale de la fosse.

D'autres caractéristiques et avantages de l'invention apparaîtront au cours de la description qui suit, faite en références aux figures annexées.

La figure 1 est une représentation schématique en coupe d'une fosse septique selon l'invention.

La figure 2 est une représentation schématique partielle en coupe de la fosse septique de la figure 1 autour du conduit d'évacuation des eaux claires.

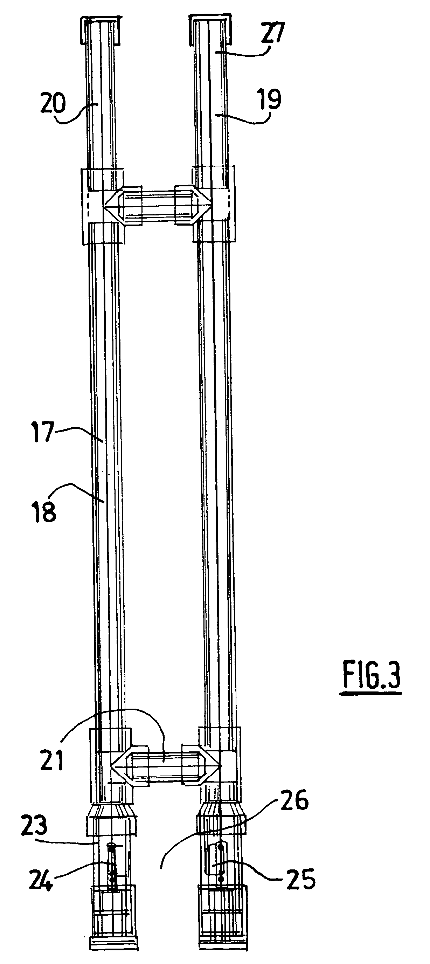

La figure 3 est une représentation schématique de côté du dispositif de repérage intégré à la fosse septique selon l'invention.

Dans la description, le terme « longitudinal » est défini selon une direction sensiblement verticale, lorsque la fosse est installée et le terme « transversal » est défini selon une direction sensiblement horizontale.

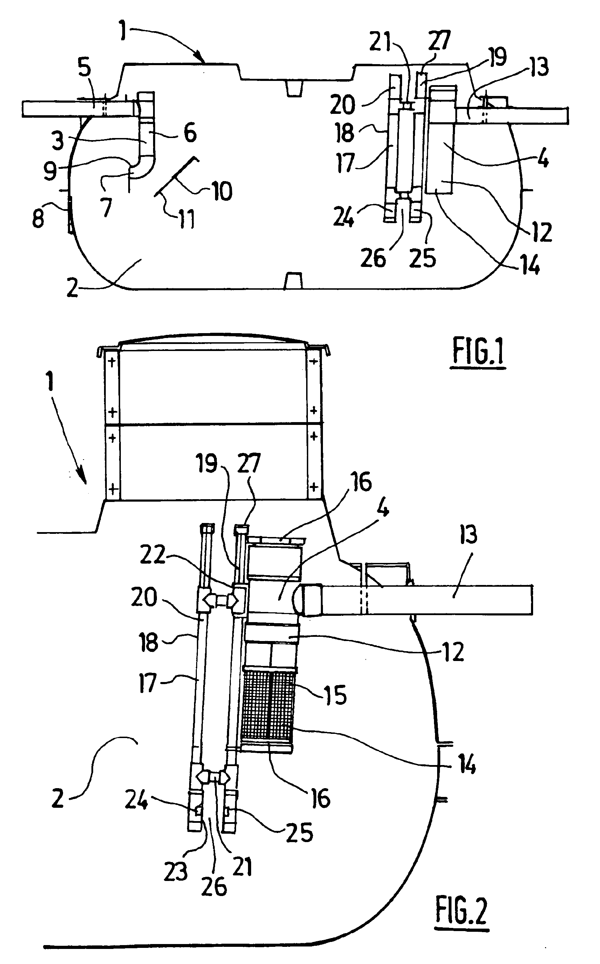

En référence à la figure 1, on décrit une fosse septique 1 toutes eaux comprenant une enceinte 2, un conduit d'amenée des eaux usées 3, un conduit d'évacuation des eaux claires 4 vers un système d'épandage (non représenté).

Une telle fosse septique peut être similaire à celle décrite dans le document EP-0 240 412, elle ne sera pas conséquent pas décrite en détail ici hormis certaines de ses caractéristiques.

Le conduit d'amenée 3 forme un double coude replié sur lui-même et comporte donc un tronçon amont 5 horizontal , un tronçon intermédiaire 6 vertical et un tronçon aval également 7 horizontal. Le tronçon amont 5 traverse la paroi 8 de l'enceinte 2, dans la partie supérieure de celle-ci, par exemple à proximité d'un couvercle (non représenté). Le tronçon aval 7 est dirigé dans son ensemble vers la paroi 8 de manière que les effluents provenant du conduit d'amenée 3 soient dirigés vers cette paroi. De plus la sortie 9 du tronçon aval 7 est découpée en forme de gouttière afin d'être ouverte vers le haut de sorte que les effluents soient aussi dirigés vers le haut.

La fosse septique 1 comprend des moyens de décantation 10 par dépôt dans le fond de l'enceinte 2 des matières les plus lourdes ou boues et par accumulation à la surface libre des graisses des particules légères et des moyens de liquéfaction au moins partielles de ces matières (matières lourdes et particules légères) par fermentation anaérobique. Ces moyens 10 sont formés au moins en partie par un déflecteur 11. Le déflecteur 11 s'étend sur toute ou au moins une partie substantielle de la largeur de l'enceinte 2, transversalement. Il est disposé au moins sensiblement au niveau de la sortie 9, comme représenté sur la figure 1. Le déflecteur 11 a pour fonction d'améliorer la décantation et de limiter la progression des turbulences vers le fond de l'enceinte 2. Selon une réalisation, le déflecteur 11 est incliné notamment de 35° à 55° sur la verticale et en particulier de 45° environ.

Le conduit d'évacuation 4 peut différer de la réalisation décrite dans le brevet EP-0 240 412. Ainsi, selon la réalisation représentée sur les figures 1 et 2, le conduit d'évacuation comprend une première portion tubulaire 12 s'étendant longitudinalement formant l'entrée dudit conduit et une deuxième portion tubulaire 13 s'étendant transversalement et destinée à être reliée au système d'épandage. La deuxième portion tubulaire 13 traverse la paroi 8 de l'enceinte 2 à l'opposé et en regard du tronçon amont 5 de la conduite d'amenée 3 selon la direction transversale.

La première portion tubulaire 12 comprend une partie extrême 14 d'entrée des eaux claires disposée à un niveau prédéterminé dans l'enceinte 2. La partie extrême 14 d'entrée des eaux claires peut être pourvue d'une grille 15 permettant le passage desdites eaux tout en retenant les plus grosses particules pour les empêcher de pénétrer dans le conduit d'évacuation 4. Les extrémités libres de la première portion tubulaire 12 sont fermées, par exemple au moyen de bouchons 16. Le diamètre de la première portion tubulaire 12 est par exemple sensiblement compris entre 1 et 1,6 fois le diamètre de la deuxième portion tubulaire 13.

Un dispositif de repérage 17 de la position de la séparation entre le milieu fluide de fond, formé par les matières lourdes, et le milieu fluide de surface, formé par les graisses et particules légères liquéfiées, est associé au conduit d'évacuation 4, comme représenté sur les figures 1 et 2. En particulier, le dispositif 17 comprend un support 18 formé de deux tubes principaux 19 et 20 s'étendant longitudinalement et parallèlement l'un à l'autre. Les deux tubes sont associés l'un à l'autre par au moins une portion de tube 21 transversale. Selon la réalisation représentée sur les figures, deux portions de tube 21 transversales associent les tubes principaux 19 et 20 l'un à l'autre. Le tube principale 19 est associé à la première portion tubulaire 12 du conduit d'évacuation 4 par des moyens de fixation 22, de sorte que le support 18 s'étend généralement parallèlement à cette portion tubulaire 12. Les tubes 19 et 20 sont fermés à leurs extrémités libres.

Le support 18 comprend une première partie extrême 23 formée par les parties extrêmes correspondantes des tubes 19 et 20. Le support 18 est associé à la portion tubulaire 12 de sorte que la partie extrême 23 se trouve à un niveau prédéterminé inférieur au niveau de la partie extrême 14 d'entrée des eaux claires de la portion tubulaire 12. Ce niveau de la partie extrême 23 correspond à un niveau d'alerte au-delà duquel les boues risquent de pénétrer dans le conduit d'évacuation 4.

A ce niveau d'alerte, la partie extrême 23 porte des moyens d'émission 24 d'ondes dans une direction transversale disposés dans la partie extrême de l'un des tubes 19 et 20. La partie extrême de l'autre tube 19 ou 20 porte des moyens de réception 25 des ondes émises par les moyens d'émission 24. Ces moyens de réception 25 sont disposés en regard des moyens d'émission 24 selon la direction transversale. Les moyens d'émission 24 et les moyen de réception 25 sont écartés l'un de l'autre d'une distance connue le long de la direction transversale et par un espace libre 26 dans lequel peuvent se trouver les milieux fluides de fond et de surface.

Selon une réalisation, le niveau d'alerte est situé à environ 1/3 de la hauteur totale de la fosse 1.

Le dispositif 17 comprend en outre des moyens de transmission (non représentés) des ondes reçues par les moyens de réception 25 le long du support 18 jusque vers sa seconde partie extrême 27. Ces moyens de transmission peuvent être couplés à des moyens d'information visuels ou sonores (non représentés), ces moyens d'information sont rendus actifs lorsque le milieu fluide change dans l'espace 26 entre les moyens d'émission 24 et les moyens de réception 25. Les moyens d'information peuvent être déportés hors de la fosse septique 1 de façon à ce qu'un utilisateur soit averti lorsque les boues dépassent le niveau d'alerte.

Les ondes émises, reçues et transmises sont choisies pour avoir des caractéristiques physiques spécifiques du milieu fluide où se trouvent les moyens d'émission 24 et de réception 25, de manière que le passage entre les moyens d'émission et de réception de la séparation entre les milieux fluides de fond et de surface se traduit par un changement significatif des caractéristiques physiques des ondes reçues. Ce changement permet d'indiquer lorsque le niveau d'alerte est dépassé par les boues présentes dans la fosse septique 1.

Selon une réalisation, les moyens d'émission 24 et de réception 25 sont de type optique. Notamment, les moyens d'émission 24 peuvent être des moyens d'émission de lumière rouge dans le domaine visible. Les moyens de réception 25 comprennent alors une cellule photoélectrique et les moyens de transmission sont une connectique électrique permettant de transmettre la sortie de cette cellule aux moyens d'information.

Chaque tube 20 et 19 comporte une fenêtre latérale protégée en regard de laquelle se trouve respectivement les moyens d'émission 24 et les moyens de réception 25, ladite fenêtre étant apte à permettre le passage des ondes émises/reçues. On assure ainsi la protection des moyens d'émission 24 et de réception 25.

## Revendications

1. Fosse septique toutes eaux comprenant une enceinte (2), un conduit d'amenée (3) des eaux usées, un conduit d'évacuation (4) des eaux claires vers un système d'épandage, le conduit d'évacuation (4) comprenant une partie extrême (14) d'entrée des eaux claires disposée à un niveau prédéterminé dans l'enceinte (2), la fosse septique comprenant des moyens de décantation (10) par dépôt sur le fond de l'enceinte des matières les plus lourdes, lesdites matières lourdes formant le milieu fluide de fond, et par accumulation en surface des graisses et particules légères de liquéfaction au moins partielle de ces matières par fermentation anaérobique, lesdites graisses et particules légères liquéfiées formant le milieu fluide de surface, la fosse septique comprenant en outre un dispositif de repérage (17) de la position de la séparation entre le milieu fluide de fond et le milieu fluide de surface, le dispositif comprenant :
- un support (18) étendu le long d'une direction longitudinale ;
- des moyens d'émission (24) d'ondes dans une direction transversale, portés par le support vers une première partie extrême (23) ;
- des moyens de réception (25) des ondes émises par les moyens d'émission (24), portés par le support (18) vers la première partie extrême (23), les moyens d'émission (24) et les moyens de réception (25) étant écartés l'un de l'autre d'une distance connue le long d'une direction transversale et par un espace libre (26) dans lequel peuvent se trouver les milieux fluides de fond et de surface ;
- des moyens de transmission des ondes reçues par les moyens de réception (25) le long du support (18) jusque vers sa seconde partie extrême (27) ;
- les ondes émises, reçues et transmises étant choisies pour avoir des caractéristiques physiques spécifiques du milieu fluide où se trouvent les moyens d'émission (24) et de réception (25), de manière que le passage entre les moyens d'émission (24) et de réception (25) de la séparation entre les milieux fluides de fond et de surface se traduit par un changement significatif des caractéristiques physiques des ondes reçues ;
la fosse septique étant **caractérisée en ce que** :
- le dispositif de repérage (17) est associé et fixé au conduit d'évacuation (4) des eaux claires,
- la première partie extrême (23) du support (18) et les moyens d'émission (24) et de réception (25) du dispositif de repérage (17) sont disposés à un niveau prédéterminé inférieur au niveau prédéterminé de la partie extrême (14) du conduit d'évacuation (4) et correspondant à un niveau d'alerte du niveau fluide de fond au-delà duquel les boues du milieu fluide de fond risquent de pénétrer dans le conduit d'évacuation (4),
- de manière que dès que le milieu fluide de fond dépasse un certain niveau entraînant un risque de pénétration des boues dans le conduit d'évacuation (4), le dispositif de repérage (17) le détecte.

2. Fosse septique selon la revendication 1, **caractérisé en ce que** les moyens d'émission (24) et de réception (25) sont de type optique.

3. Fosse septique selon la revendication 2, **caractérisé en ce que** les moyens d'émission (24) sont des moyens d'émission de lumière rouge dans le domaine visible.

4. Fosse septique selon la revendication 2 ou 3, **caractérisé en ce que** les moyens de réception (25) comprennent une cellule photoélectrique.

5. Fosse septique selon l'une quelconque des revendications 1 à 4, **caractérisé en ce que** le dispositif de repérage (17) comprend en outre des moyens d'information visuels ou sonores couplés aux moyens de transmission, lesdits moyens d'information étant rendus actifs lorsque le milieu fluide change dans l'espace (26) entre les moyens d'émission (24) et les moyens de réception (25).

6. Fosse septique selon l'une quelconque des revendications 1 à 5, **caractérisé en ce que** le support (18) du dispositif de repérage (17) se présente sous la forme de deux tubes principaux (19, 20) s'étendant longitudinalement et parallèlement l'un à l'autre, lesdits tubes étant associés l'un à l'autre, la première partie extrême de l'un des tubes (19, 20) renfermant les moyens d'émission (24), la première partie extrême de l'autre tube (19, 20) renfermant les moyens de réception (25), les tubes (19, 20) étant fermés à leurs extrémités libres.

7. Fosse septique selon la revendication 6, **caractérisé en ce que** chaque tube (19, 20) comporte une fenêtre latérale protégée en regard de laquelle se trouve respectivement les moyens d'émission (24) et les moyens de réception (25), ladite fenêtre étant apte à permettre le passage des ondes émises/reçues.

8. Fosse septique selon l'une quelconque des revendications 1 à 7, **caractérisé en ce que** le conduit d'amenée (3) forme un double coude dont le tronçon aval (7) est dirigé dans son ensemble vers la paroi (8) de l'enceinte (2) de manière que les effluents soient dirigés vers cette paroi et la sortie (9) est ouverte également vers le haut de manière que les effluents soient dirigés également vers le haut.

9. Fosse septique selon l'une quelconque des revendications 1 à 8, **caractérisé en ce que** le conduit d'évacuation (4) comprend une première portion tubulaire (12) s'étendant longitudinalement formant l'entrée dudit conduit et une deuxième portion tubulaire (13) s'étendant transversalement destinée à être reliée au système d'épandage, la partie extrême (14) d'entrée des eaux claires étant pourvue d'une grille (15) permettant le passage desdites eaux, la première portion tubulaire (12) étant fermée à ses extrémités libres.

10. Fosse septique selon la revendication 9, **caractérisé en ce que** la première portion tubulaire (12) présente un diamètre sensiblement compris entre 1 et 1,6 fois le diamètre de la deuxième portion tubulaire (13).

11. Fosse septique selon l'une quelconque des revendications 1 à 10, **caractérisé en ce qu'**elle comprend au moins un déflecteur (11) placé transversalement dans l'enceinte (2), au moins sensiblement au niveau de la sortie (9) du conduit d'amenée (3), ledit déflecteur s'étendant sur toute ou au moins une partie substantielle de la largeur de l'enceinte (2), le déflecteur (11) ayant pour fonction d'améliorer la décantation et de limiter la progression des turbulences vers le fond de l'enceinte.

12. Fosse septique selon l'une quelconque des revendications 1 à 11, **caractérisé en ce que** le niveau d'alerte est situé à environ 1/3 de la hauteur totale de la fosse.

## Claims

1. An all-purpose septic tank comprising a chamber (2), a waste water feed pipe (3) and a pipe (4) for discharging clear water to a spreading system, the discharge pipe (4) comprising an end part (14) for entry of the clear water disposed at a predetermined level in the chamber (2), the septic tank comprising means (10) of settling by the deposition of the heaviest matter on the bottom of the chamber, said heavy matter forming the bottom fluid medium, and by the accumulation on the surface of the fats and light particles for the at least partial liquefaction of these materials by anaerobic fermentation, said fats and liquefied light particles forming the surface fluid medium, the septic tank also comprising a device (17) for locating the position of the separation between the bottom fluid medium and the surface fluid medium, the device comprising:
- a support (18) extending along a longitudinal direction;
- means (24) of sending waves in a transverse direction, carried by the support towards a first end part (23);
- means (25) of receiving the waves sent by the sending means (24), carried by the support (18) towards the first end part (23), the sending means (24) and the receiving means (25) being separated from each other by a known distance along a transverse direction and by a free space (26) in which the bottom and surface fluid media can be situated;
- means of transmitting the waves received by the receiving means (25) along the support (18) as far as its second end part (27);
- the waves sent, received and transmitted being chosen so as to have specific physical characteristics of the fluid medium where the sending (24) and receiving (25) means are situated, so that the passage between the sending (24) and receiving (25) means of the separation between the bottom and surface fluid media results in a significant change in the physical characteristics of the waves received;
the septic tank being **characterised in that**:
- the locating device (17) is associated with and fixed to the clear-water discharge pipe (4),
- the first end part (23) of the support (18) and the sending (24) and receiving (25) means of the locating device (17) are disposed at a predetermined level lower than the predetermined level of the end part (14) of the discharge pipe (4) and corresponding to an alert level as to the bottom fluid level beyond which the sludge of the bottom fluid medium risks entering the discharge pipe (4),
- so that, as soon as the bottom fluid medium exceeds a certain level giving rise to a risk of entry of the sludge in the discharge pipe (4), the locating device (17) detects it.

2. A septic tank according to claim 1, **characterised in that** the sending (24) and receiving (25) means are of the optical type.

3. A septic tank according to claim 2, **characterised in that** the sending means (24) are means of sending red light in the visible range.

4. A septic tank according to claim 2 or 3, **characterised in that** the receiving means (25) comprise a photoelectric cell.

5. A septic tank according to any one of claims 1 to 4, **characterised in that** the locating device (17) also comprises visual or audible information means coupled to the transmission means, said information means being made active when the fluid medium changes in the space (26) between the sending means (24) and the receiving means (25).

6. A septic tank according to any one of claims 1 to 5, **characterised in that** the support (18) of the locating device (17) is in the form of two main tubes (19, 20) extending longitudinally and parallel to each other, said tubes being associated with each other, the first end part of one of the tubes (19, 20) containing the sending means (24), the first end part of the other tube (19, 20) containing the receiving means (25), the tubes (19, 20) being closed at their free ends.

7. A septic tank according to claim 6, **characterised in that** each tube (19, 20) comprises a protected side window opposite which the sending means (24) and the receiving means (25) are respectively situated, said window being able to allow passage of the sent/received waves.

8. A septic tank according to any one of claims 1 to 7, **characterised in that** the feed pipe (3) forms a double elbow the downstream section (7) of which is directed overall towards the wall (8) of the chamber (2) so that the effluent is directed towards this wall and the discharge (9) of which is also open upwards so that the effluent is directed also upwards.

9. A septic tank according to any one of claims 1 to 8, **characterised in that** the discharge pipe (4) comprises a first tubular portion (12) extending longitudinally, forming the entry of said pipe, and a second tubular portion (13) extending transversely, intended to be connected to the spreading system, the end part (14) for entry of the clear water being provide with a grille (15) enabling said water to pass, the first tubular portion (12) being closed at its free ends.

10. A septic tank according to claim 9, **characterised in that** the first tubular portion (12) has a diameter substantially lying between 1 and 1.6 times the diameter of the second tubular portion (13).

11. A septic tank according to any one of claims 1 to 10, **characterised in that** it comprises at least one deflector (11) placed transversely in the chamber (2), at least substantially level with the discharge (9) of the feed pipe (3), said deflector extending over all or at least a substantial part of the width of the chamber (2), the function of the deflector (11) being to improve the settling and to limit the progression of the turbulence towards the bottom of the chamber.

12. A septic tank according to any one of claims 1 to 11, **characterised in that** the alert level is situated at approximately 1/3 of the total height of the tank.

## Patentansprüche

1. Klärgrube für alle Wassersorten mit einer Einfriedung (2), einer Zuleitung (3) der Abwässer, einer Ableitung (4) des klaren Wassers zu einem Verteilsystem, wobei die Ableitung (4) einen Endteil (14) des Einlaufs des klaren Wassers umfasst, der an einem vorbestimmten Niveau in der Einfriedung (2) angeordnet ist, wobei die Klärgrube Klärmittel (10) per Ablagerung des schwersten Materials auf dem Boden der Einfriedung umfasst, wobei das genannte schwere Material das flüssige Bodenmilieu umfasst, und per Akkumulation der leichten Fette und Partikel der zumindest teilweisen Verflüssigung dieses Materials per anaerober Fermentierung an der Oberfläche, wobei die genannten leichten verflüssigten Fette und Partikel das flüssige Oberflächenmilieu bilden, wobei die Klärgrube darüber hinaus eine Markierungsvorrichtung (17) der Position der Trennung zwischen dem flüssigen Bodenmilieu und dem flüssigen Oberflächenmilieu umfasst, wobei die Vorrichtung Folgendes umfasst:
- einen entlang einer Längsrichtung erstreckten Träger (18);
- von einem Träger zu einem ersten Endteil (23) getragene Ausgabemittel (24) von Wellen in einer Querrichtung,
- vom Träger (18) zum ersten Endteil (23) getragene Aufnahmemittel (25) der von den Ausgabemitteln (24) ausgegebenen Wellen, wobei die Ausgabemittel (24) und die Aufnahmemittel (25) voneinander um eine bekannte Entfernung entlang einer Querrichtung und DURCH einen freien Raum (26), in dem sich die flüssigen Boden- und Oberflächenmilieus befinden können, beabstandet sind;
- Übertragungsmittel der von den Eingangsmitteln (25) entlang des Trägers (18) bis zu seinem zweiten Endteil (27) empfangenen Wellen;
- wobei die ausgegebenen, empfangenen und übertragenen Wellen ausgewählt sind, um spezifische physikalische Merkmale des flüssigen Milieus zu haben, in dem sich die Ausgabe- (24) und Empfangsmittel (25) derart befinden, dass der Durchgang zwischen den Ausgabe-(24) und Empfangsmitteln (25) der Trennung zwischen den flüssigen Boden- und Oberflächenmilieus durch eine erhebliche Änderung der physikalischen Merkmale der empfangenen Wellen zum Ausdruck kommt;
Wobei die Klärgrube **dadurch gekennzeichnet ist, dass**:
- die Markierungsvorrichtung (17) der Ableitung (4) des klaren Wassers zugeordnet und daran befestigt ist.
- der erste Endteil (23) des Trägers (18) und die Ausgabe- (24) und Empfangsmittel (25) der Markierungsvorrichtung (17) auf einem vorbestimmten Niveau unter dem vorbestimmten Niveau des Endteils (14) der Ableitung (4) angeordnet sind und einem Warnniveau des flüssigen Bodenniveaus entsprechen, bei dessen Überschreitung die Schlämme des flüssigen Bodenniveaus Gefahr laufen, in die Ableitung (4) einzudringen,
- derart, dass, sobald das flüssige Bodenniveau ein bestimmtes Niveau überschreitet, das eine Gefahr des Eindringens der Schlämme in die Ableitung (4) nach sich zieht, die Markierungsvorrichtung (17) dies feststellt.

2. Klärgrube gemäß Anspruch 1, **dadurch gekennzeichnet, dass** die Ausgabe- (24) und Empfangsmittel (25) vom optischen Typ sind.

3. Klärgrube gemäß Anspruch 2, **dadurch gekennzeichnet, dass** die Ausgabemittel (24) Ausgabemittel mit rotem Licht im sichtbaren Bereich sind.

4. Klärgrube gemäß Anspruch 2 oder 3, **dadurch gekennzeichnet, dass** die Empfangsmittel (25) eine photoelektrische Zelle umfassen.

5. Klärgrube gemäß Anspruch 1 bis 4, **dadurch gekennzeichnet, dass** die Markierungsvorrichtung (17) darüber hinaus an die Übertragungsmittel gekoppelte visuelle oder Ton-Informationsmittel umfassen, wobei die genannten Informationsmittel aktiv gemacht werden, wenn sich das flüssige Milieu im Raum (26) zwischen den Ausgabemitteln (24) und den Empfangsmitteln (25) ändert.

6. Klärgrube gemäß Anspruch 1 bis 5, **dadurch gekennzeichnet, dass** der Träger (18) der Markierungsvorrichtung (17) sich in Form von zwei Hauptröhren (19, 20) darstellt, die sich in Längsrichtung und parallel zueinander erstrecken, wobei die genannten Röhren einander zugeordnet sind, wobei der erste Endteil einer der Röhren (19, 20) die Ausgabemittel (24) umschließt, wobei der erste Endteil der anderen Röhre (19, 20) die Empfangsmittel (25) umschließt, wobei die Röhren (19, 20) an ihren freien Enden geschlossen sind.

7. Klärgrube gemäß Anspruch 6, **dadurch gekennzeichnet, dass** jede Röhre (19, 20) ein geschütztes laterales Fenster umfasst, dem gegenüber sich jeweils die Ausgabemittel (24) und die Empfangsmittel (25) befinden, wobei das genannte Fenster geeignet ist, um den Durchgang der ausgegebenen / empfangenen Wellen zu erlauben.

8. Klärgrube gemäß Anspruch 1 bis 7, **dadurch gekennzeichnet, dass** die Zuleitung (3) ein doppeltes Knie formt, dessen nachgeschalteter Abschnitt (7) insgesamt zur Wand (8) der Einfriedung (2) derart gerichtet ist, dass die Abläufe zu dieser Wand gerichtet sind und der Auslauf (9) ebenfalls nach oben hin derart offen ist, dass die Abläufe ebenfalls nach oben gerichtet sind.

9. Klärgrube gemäß Anspruch 1 bis 8, **dadurch gekennzeichnet, dass** die Ableitung (4) einen ersten röhrenförmigen Abschnitt (12), der sich in Längsrichtung erstreckt und den Einlauf der genannten Leitung bildet, und einen zweiten röhrenförmigen Abschnitt (13), der sich quer erstreckt und dazu bestimmt ist, mit dem Verteilsystem verbunden zu werden, umfasst, wobei der Endteil (14) des Einlaufs des klaren Wassers mit einem Gitter (15) versehen ist, das den Durchgang des genannten Wassers ermöglicht, wobei der erste röhrenförmige Abschnitt (12) an seinen freien Enden geschlossen ist.

10. Klärgrube gemäß Anspruch 9, **dadurch gekennzeichnet, dass** der erste röhrenförmige Abschnitt (12) einen deutlich zwischen dem 1- und 1,6-Fachen inbegriffenen Durchmesser des Durchmessers des zweiten röhrenförmigen Abschnitts (13) aufweist.

11. Klärgrube gemäß Anspruch 1 bis 10, **dadurch gekennzeichnet, dass** sie wenigstens ein quer in der Einfriedung (2) platziertes Ableitblech (11) wenigstens deutlich auf der Höhe des Auslaufs (9) der Zuleitung (3) umfasst, wobei das genannte Ableitblech sich über die gesamte oder wenigstens einen erheblichen Teil der Breite der Einfriedung (2) erstreckt, wobei das Ableitblech (11) die Funktion hat, die Klärung zu verbessern und die Progression der Turbulenzen zum Boden der Einfriedung hin zu begrenzen.

12. Klärgrube gemäß Anspruch 1 bis 11, **dadurch gekennzeichnet, dass** das Warnniveau sich bei rund 1/3 der gesamten Höhe des Grabens befindet.
